# EUROPÄISCHE PATENTANMELDUNG

(11) **EP 4 438 359 A1**
(43) Veröffentlichungstag der Anmeldung: **02.10.2024**
(21) Anmeldenummer: 24020078.2
(22) Anmeldetag: 12.03.2024
(51) Int. Cl.: B60J 10/50, B60J 10/763, B60J 10/79

(54) **FENSTERFÜHRUNG, KRAFTFAHRZEUGFENSTER UND FENSTERSCHEIBE**

(30) Priorität: 31.03.2023 DE 102023108357
(71) Anmelder: CQLT SaarGummi Technologies S.à.r.l., 5544 Remich (LU)
(72) Erfinder: Thome, Martin, 66839 Schmelz-Limbach (DE)
(74) Vertreter: Patentanwälte Bernhardt / Wolff Partnerschaft mbB

(57) **Zusammenfassung**

Die Erfindung betrifft eine Fensterführung (2a) zur Führung einer versenkbaren Fensterscheibe (3a) eines Kraftfahrzeugs. Um zuverlässig eine bündige Führung und Abdichtung der versenkbaren Fensterscheibe (3a) gegenüber einem Fensterrahmen bzw. einer Seitenwand einer Fahrzeugkarosserie zu ermöglichen, umfasst die Fensterführung (2a) mindestens ein an der Fensterscheibe (3a) befestigbares magnetisch wirksames Element (6) und mindestens ein an einem Fensterrahmen (4), der Seitenwand der Fahrzeugkarosserie oder einer Fensterdichtung (9) befestigbares magnetisch wirksames Gegenelement (7).

## Beschreibung

Die Erfindung betrifft eine Fensterführung nach dem Oberbegriff des Anspruchs 1, ein Kraftfahrzeugfenster mit einer derartigen Fensterführung sowie eine Fensterscheibe.

Durch Benutzung sind Kraftfahrzeugfenster bekannt, welche einen Fensterrahmen, eine in dem Fensterrahmen versenkbar angeordnete Fensterscheibe sowie eine Fensterführung zur Führung der Fensterscheibe in dem Fensterrahmen umfassen. Die Fensterscheibe ist dabei beispielsweise mittels eines elektrischen Antriebs zwischen einer oberen Schließstellung und einer unteren Öffnungsstellung stufenlos gegenüber dem Fensterrahmen verschiebbar. Um eine sichere Positionierung der Fensterscheibe gegenüber dem Fensterrahmen in jeder Stellung zu gewährleisten, umgreift die Fensterführung einen seitlichen Randbereich der Fensterscheibe. Hierdurch wird gewährleistet, dass die Fensterscheibe beispielsweise durch den Unterdruck während der Fahrt nicht nach außen gezogen wird. Der Fensterrahmen steht jedoch seitlich von der Fensterscheibe vor und bildet eine Stufe, welche neben optischen Nachteilen vor allem auch eine Windangriffsfläche darstellt. Hierdurch erhöht sich der Luftwiderstand und Windgeräusche nehmen zu. Bei Cabrio- und Coupé-Kraftfahrzeugen werden die versenkbaren Fensterscheiben nicht in einem Rahmen geführt, sondern unter Vorspannung gegen eine Fensterdichtung an einer Seitenwand der Fahrzeugkarosserie gedrückt, was jedoch eine erhebliche Reibung beim Verfahren der Fensterscheibe zur Folge hat.

Aufgabe der Erfindung ist, eine Fensterführung, ein Kraftfahrzeugfenster mit einer derartigen Fensterführung und eine Fensterscheibe zu schaffen, welche zuverlässig eine bündige Führung und Abdichtung der versenkbaren Fensterscheibe gegenüber dem Fensterrahmen bzw. einer Seitenwand einer Fahrzeugkarosserie ermöglichen.

Diese Aufgabe wird gelöst durch mindestens ein an der Fensterscheibe befestigbares magnetisch wirksames Element und mindestens ein an einem Fensterrahmen, einer Seitenwand einer Fahrzeugkarosserie oder einer Fensterdichtung befestigbares magnetisch wirksames Gegenelement. Das magnetisch wirksame Element und das magnetisch wirksame Gegenelement können ausgebildet sein, eine gegenseitig anziehende und/oder abstoßende Kraft zu erzeugen, um die Fensterscheibe in einer bestimmten Position gegenüber dem Fensterrahmen zu halten oder die Fensterscheibe auch in eine bestimmte Position zu bewegen. Dies ermöglicht eine sichere, einfach einstellbare und reibungsarme Positionierung und Fixierung der Fensterscheibe.

Magnetisch wirksam bedeutet in diesem Zusammenhang, dass das entsprechende Element magnetisiert oder magnetisierbar ist. Als magnetisierte Elemente sind Dauer- bzw. Permanentmagnete zu verstehen. Magnetisierbar sind u.a. bestimmte Metalle, insbesondere ferromagnetisches Material, welche von einem Permanentmagneten angezogen werden. Ein Elektromagnet wird durch Anlegen einer elektrischen Spannung und dem hieraus resultierenden Stromfluss magnetisiert.

In einer vorteilhaften Ausführungsform kann das magnetisch wirksame Element und/oder das magnetisch wirksame Gegenelement aus einem magnetisierbaren Material, insbesondere aus (ferromagnetischem) Metall, als Permanentmagnet oder als Elektromagnet ausgebildet sein. Vorzugsweise kann das magnetisch wirksame Element der Fensterscheibe aus einem magnetisierbaren Material, insbesondere (ferromagnetischem) Metall, als Permanentmagnet oder Elektromagnet ausgebildet sein und das magnetisch wirksame Gegenelement des Fensterrahmens, der Seitenwand der Fahrzeugkarosserie oder der Fensterdichtung aus einem Permanentmagnet oder einem Elektromagnet gebildet sein. In diesem Fall ist das Gegenelement immer magnetisch aktiv, das heißt die magnetische Wirkung geht von dem Fensterrahmen, der Seitenwand der Fahrzeugkarosserie oder der Fensterdichtung aus. Wird das magnetisch wirksame Element der Fensterscheibe ebenfalls als aktives magnetisches Element wie einem Permanentmagnet oder einem Elektromagnet ausgebildet, kann die Haltekraft zusätzlich erhöht bzw. verringert, insbesondere variiert, werden, um beispielsweise die Reibung beim Verfahren der Fensterscheibe zu reduzieren.

In einer alternativen Ausführungsform kann das magnetisch wirksame Element der Fensterscheibe als Permanentmagnet oder Elektromagnet ausgebildet sein und das magnetisch wirksame Gegenelement des Fensterrahmens, der Seitenwand der Fahrzeugkarosserie oder der Fensterdichtung kann ein magnetisierbares Material, insbesondere ein (ferromagnetisches) Metall des Fensterrahmens bzw. der Seitenwand der Fahrzeugkarosserie, einen Permanentmagnet oder einen Elektromagnet umfassen. So kann beispielsweise in der Kombination mindestens eines Elektromagneten in der Fensterscheibe und einer (ferromagnetischen) metallischen Kontaktfläche, welche sich entlang der Fensterführung erstreckt und vorzugsweise aus einem Blech des Fensterrahmens bzw. der Seitenwand der Fahrzeugkarosserie gebildet ist, die Fensterscheibe in jeder Position zwischen der unteren Öffnungsstellung und der oberen Schließstellung bei Anlegen einer Spannung und einem Stromfluss durch den Elektromagneten gegenüber dem Fensterrahmen bzw. der Seitenwand der Fahrzeugkarosserie fixiert werden. Das mindestens eine magnetisch wirksame Element in der Fensterscheibe ist hierbei magnetisch aktiv, das heißt die magnetische Wirkung geht hiervon aus. Um den/die Elektromagneten in der Fensterscheibe mit elektrischer Energie zu versorgen, können angrenzend an einen Glasrand oder zwischen zwei Glasplatten einer als Verbundsicherheitsglas ausgebildeten Fensterscheibe Stromleitungen geführt sein.

In einer weiter vorteilhaften Ausführungsform ist das magnetisch wirksame Element an einer Innenseite der Fensterscheibe, an einem an der Fensterscheibe befestigten Halteelement, in einer Aussparung in der Fensterscheibe und/oder zwischen zwei Scheiben einer als Verbundsicherheitsglas ausgebildeten Fensterscheibe angeordnet. Durch eine Integration in die Fensterscheibe wird eine bündige Innenfläche der Fensterscheibe gewährleistet, an welcher beispielsweise Dichtungslippen stufenlos anliegen können, was eine besonders gute Abdichtung gewährleistet. Durch eine lokale Trübung des Glases im (Rand-)Bereich der Fensterscheibe, in welchem das mindestens eine magnetisch wirksame Element angeordnet ist, bzw. entlang eines gesamten (vertikalen) Rands der Fensterscheibe, in welchem das magnetisch wirksame Element angeordnet ist, kann das magnetisch wirksame Element versteckt werden.

Das magnetisch wirksame Gegenelement kann in einer Fensterdichtung in Form eines Dichtungsprofils, insbesondere in einem extrudierten Dichtungsprofil, eingebettet oder in einer Aussparung in einem Dichtungsprofil angeordnet sein, wobei das Dichtungsprofil mindestens eine zur Anlage an der Fensterscheibe ausgebildete Dichtlippe umfassen kann. Die Integration des mindestens einen magnetisch wirksamen Gegenelements in/an die Fensterdichtung ermöglicht eine besonders einfache Montage, da die Fensterdichtung mit dem mindestens einen magnetisch wirksamen Gegenelement vorgefertigt werden kann. Wenn das Kraftfahrzeugfenster über einen Fensterrahmen verfügt, kann die Fensterdichtung kann an dem Fensterrahmen befestigt werden, alternativ wird die Fensterdichtung an der Seitenwand der Fahrzeugkarosserie befestigt. Wird das mindestens eine magnetisch wirksame Gegenelement direkt an dem Fensterrahmen oder der der Seitenwand der Fahrzeugkarosserie befestigt oder aus dem Fensterrahmen oder der Seitenwand der Fahrzeugkarosserie gebildet, ergibt sich eine besonders gute Abstützung, wobei vorzugsweise das mindestens eine magnetisch wirksame Gegenelement durch entsprechende Aussparungen in der Fensterdichtung zugänglich ist. Es ist jedoch auch möglich, das mindestens eine magnetisch wirksame Gegenelement mit dem Material der Fensterdichtung zu bedecken, so dass das mindestens eine magnetisch wirksame Element von außen nicht sichtbar ist. Beispielsweise kann das magnetisch wirksame Gegenelement in einer Hohlkammer oder einer Wand einer Hohlkammer der Fensterdichtung angeordnet sein, welche zur Anlage an der Fensterscheibe ausgebildet ist und damit nur einen geringen Abstand zu dem magnetisch wirksamen Element der Fensterscheibe aufweist.

Die Fensterführung kann vorzugsweise eine Fensterdichtung in Form eines Dichtungsprofils, insbesondere eines extrudierten Dichtungsprofils, aufweisen, in dessen Längsrichtung mehrere voneinander beabstandete magnetisch wirksame Gegenelemente angeordnet sind, wodurch über einen größeren Bereich der Fensterdichtung eine Wechselwirkung mit dem mindestens einen magnetisch wirksamen Element in der Fensterscheibe erreicht werden kann.

Die magnetisch wirksamen Gegenelemente in der Fensterdichtung bzw. an dem Fensterrahmen oder der Seitenwand der Fahrzeugkarosserie können in Längsrichtung der Fensterdichtung gleichmäßig oder ungleichmäßig verteilt angeordnet sein. Insbesondere kann vorgesehen sein, dass mehr magnetisch wirksame Gegenelemente in einem Abschnitt der Fensterdichtung nahe der oberen Schließstellung einer Fensterscheibe angeordnet sind, als in einem Bereich nahe einer unteren Öffnungsstellung der Fensterscheibe. Vorteilhaft kann vorgesehen sein, dass entsprechende magnetisch wirksame Gegenelemente nur in einer oberen Hälfte bzw. einem oberen Drittel der Längserstreckung der Fensterdichtung angrenzend zu einer oberen Schließstellung der Fensterscheibe vorgesehen sind. Hierdurch kann eine Fensterscheibe zielgerichtet in dem relevanten oberen Abschnitt, welcher der Schließstellung zugewandt ist, gehalten werden.

Des Weiteren wird auch ein Kraftfahrzeugfenster umfassend einen Fensterrahmen bzw. eine Seitenwand einer Fahrzeugkarosserie, eine in dem Fensterrahmen bzw. an der Seitenwand versenkbar angeordnete Fensterscheibe sowie die zuvor beschriebene Fensterführung zur Führung der Fensterscheibe in dem Fensterrahmen bzw. an der Seitenwand beansprucht. Die Fensterscheibe kann dabei vorzugsweise bündig zu dem Fensterrahmen bzw. der Seitenwand der Fahrzeugkarosserie oder zu einer an dem Fensterrahmen bzw. der Seitenwand der Fahrzeugkarosserie befestigten Blende angeordnet sein, um einen stufenlosen Übergang zwischen der Fensterscheibe und dem Fensterrahmen bzw. der Blende zu ermöglichen.

Dem Kraftfahrzeugfenster kann zudem eine Steuereinrichtung zugeordnet sein, um die magnetisch wirksamen Elemente und/oder Gegenelemente beispielsweise zur Bewegung der Fensterscheibe zwischen der Schließ- und Öffnungsstellung vergleichbar einem Linearmotor vorzugsweise separat anzusteuern und/oder um die Haltekraft der magnetisch wirksamen Elemente und/oder Gegenelemente vorzugsweise individuell einstellen zu können. Hierdurch kann gezielt die Fensterscheibe gegebenenfalls ohne weiteren Antrieb verfahren werden. Somit können die Kosten und Gewicht eines Fensterhebers eingespart werden. Die Steuereinrichtung kann auch mindestens einen Sensor umfassen, um den aktuellen Abstand zwischen dem magnetisch wirksamen Element und dem magnetisch wirksamen Gegenelement bzw. zwischen der Fensterscheibe und dem Fensterrahmen zu erfassen. Der Sensor kann auch elektromagnetisch ausgebildet sein, insbesondere kann die gleiche Spule des Elektromagneten auch für den Sensor verwendet werden. Die Steuereinrichtung kann dann die magnetisch wirksamen Elemente/Gegenelemente derart ansteuern, dass ein gewünschter Abstand erreicht bzw. beibehalten wird.

Alternativ oder zusätzlich kann die Fensterscheibe mehrere magnetisch wirksame Elemente umfassen, insbesondere in Längsrichtung der Fensterführung voneinander beabstandet, welche vorzugsweise in einem Randbereich der Fensterscheibe angrenzend zu der Fensterführung angeordnet sind. Die magnetisch wirksamen Elemente werden mit der Fensterscheibe mitbewegt und können damit gezielt unabhängig von der Position der Fensterscheibe immer einen bestimmten Abschnitt der Fensterscheibe gegenüber dem Fensterrahmen fixieren. Vorzugsweise können die magnetisch wirksamen Elemente in der oberen Hälfte der Fensterscheibe bzw. einem oberen Drittel der Fensterscheibe angeordnet sein.

Es wird auch eine Fensterscheibe für ein Kraftfahrzeug, insbesondere für das zuvor beschriebene Kraftfahrzeugfenster, beansprucht, welche mindestens ein magnetisch wirksames Element umfasst, wobei das magnetisch wirksame Element in einem Randbereich der Fensterscheibe angeordnet ist und insbesondere aus einem (ferromagnetischen) Metall oder als Elektromagnet ausgebildet ist. Vorzugsweise sind mehrere magnetisch wirksame Elemente, insbesondere mehrere Elektromagneten, in dem Randbereich vorgesehen und entlang des Randbereichs voneinander beabstandet angeordnet. Bei dem Randbereich kann es sich vorzugsweise um einen seitlichen, (annähernd) vertikalen Randbereich der Fensterscheibe handeln, welcher angrenzend beispielsweise zu der A-, B- oder C-Säule des Kraftfahrzeugs angeordnet ist, und/oder einen oberen, (annähernd) horizontalen Randbereich der Fensterscheibe. Der Randbereich kann sich vorzugsweise bis maximal 6 cm, insbesondere bis maximal 4 cm, besonders bevorzugt bis maximal 3 cm vom Rand erstrecken.

Weitere Besonderheiten und Vorzüge der Erfindung ergeben sich aus der folgenden Beschreibung bevorzugter Ausführungsbeispiele anhand der Zeichnungen. Es zeigen:
- Fig. 1: eine Schnittdarstellung durch ein Kraftfahrzeugfenster mit einer Fensterführung gemäß einer ersten Ausführungsform und
- Fig. 2: eine Schnittdarstellung durch ein Kraftfahrzeugfenster mit einer Fensterführung gemäß einer zweiten Ausführungsform.

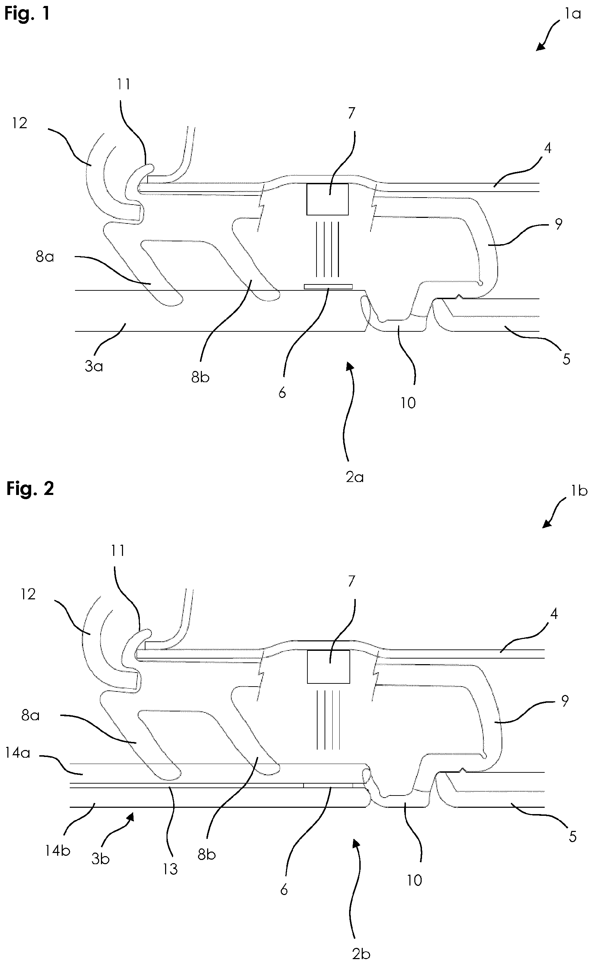

Figur 1 zeigt eine Schnittdarstellung durch einen Bereich eines Kraftfahrzeugfensters 1a mit einer (annähernd) vertikalen Fensterführung 2a gemäß einer ersten Ausführungsform. Die Fensterführung 2a ist ausgebildet, eine versenkbaren Fensterscheibe 3a in Richtung senkrecht zu der Zeichnungsebene zwischen einer oberen Schließstellung und einer unteren Öffnungsstellung zu führen und abzudichten. Bei dem Fensterrahmen 4 handelt es sich um einen (annähernd) vertikalen Rahmenabschnitt eines den Fensterbereich umschließenden Fensterrahmens. Die gezeigte Ausgestaltung könnte jedoch zusätzlich oder alternativ an dem oberen (annähernd horizontalen) Rahmenabschnitt des Fensterrahmens vorgesehen sein, an welchem die Fensterscheibe 3a in der Schließstellung angeordnet ist und gehalten wird. In dem gezeigten Ausführungsbeispiel ist an dem Fensterrahmen 4 eine Blende 5 befestigt, welche mit ihrer Außenseite bündig zu einer Außenseite der Fensterscheibe 3a angeordnet ist, um einen bündigen Übergang zwischen Fensterscheibe 3a und Blende 5 des Fensterrahmens 4 zu ermöglichen. Bei dem gezeigten Schnitt könnte es sich jedoch in einer alternativen Ausführungsform auch um ein rahmenloses Kraftfahrzeugfenster handeln, bei welchem mit Bezugszeichen 4 eine Seitenwand der Fahrzeugkarosserie, beispielsweise ein Teil der B-Säule, beziffert ist. In dieser nicht gezeigten Ausführungsform ist dann die Fensterscheibe 3a gegenüber den übrigen, an der Seitenwand der Fahrzeugkarosserie befestigten Elementen beim Öffnen der Fahrzeugtür beweglich.

Um die Fensterscheibe 3a gegenüber dem Fensterrahmen 4 zu fixieren und insbesondere in Y-Richtung, also in der Figur 1 nach unten, zuverlässig zu positionieren, ist an der Fensterscheibe 3a ein magnetisch wirksames Element 6 in Form eines magnetisierbaren (ferromagnetischen) Metalls und an dem Fensterrahmen 4 gegenüberliegend dem magnetisch wirksamen Element 6 ein magnetisch wirksames Gegenelement 7 in Form eines Elektromagneten befestigt. Durch die magnetische Wechselwirkung zwischen dem Element 6 und dem Gegenelement 7 kann die Fensterscheibe 3a mit einstellbarer magnetischer Kraft in Richtung des Fensterrahmens 4 gezogen werden. Eine höhere Haltekraft ist insbesondere bei einer Fahrt mit hoher Geschwindigkeit notwendig, bei welcher ein an der Außenseite anliegender Unterdruck die Fensterscheibe 3 nach außen, also in Figur 1 nach unten, zieht.

In einer nicht gezeigten alternativen Ausführungsform kann das magnetisch wirksame Element 6 beispielsweise durch einen Permanentmagneten gebildet sein, so dass zusätzlich zu einer magnetisch anziehenden Kraft auch eine magnetisch abstoßende Kraft durch den Elektromagneten 7 erzeugt werden kann. Das bewusste Wegdrücken der Fensterscheibe 3a in Richtung der Außenseite, in Figur 1 also nach unten, kann beispielsweise beim Verfahren der Fensterscheibe verwendet werden, um den Anpressdruck und damit die Reibung der gezeigten Dichtlippen 8a, 8b, welche an einer Innenseite der Fensterscheibe 3a anliegen, zu reduzieren.

Das magnetisch wirksame Gegenelement 7 ist in einer nicht dargestellten Aussparung in einer Fensterführung in Form eines Dichtungsprofils 9 vorgesehen und an dem Fensterrahmen 4 befestigt. Das Dichtungsprofil 9 umfasst in dem gezeigten Querschnitt an einem Ende die Dichtungslippen 8a, 8b und an einem gegenüberliegenden Ende einen Dichtungsvorsprung 10, welcher bündig mit der Fensterscheibe 3 und der Blende 5 in einem Zwischenraum zwischen Fensterscheibe 3 und Blende 5 angeordnet ist und abdichtend mit einer nicht bezifferten Dichtungslippe an der Fensterscheibe 3 und zusätzlich auch an der Blende 5 anliegt. Das magnetisch wirksame Element 6 sowie das magnetisch wirksame Gegenelement 7 sind zwischen der Dichtungslippe 8b und dem Dichtungsvorsprung 10 in einem Hohlraum, welcher von der Dichtungslippe 8b, der Fensterscheibe 3a, dem Dichtungsvorsprung 10, dem Fensterrahmen 4 sowie dem Dichtungsprofil 9 begrenzt wird, angeordnet. Hierdurch wird das magnetisch wirksam Element 6 sowie das magnetisch wirksame Gegenelement 7 zuverlässig vor Umwelteinflüssen und insbesondere vor Verschmutzung geschützt.

Das Dichtungsprofil 9 umfasst zudem eine Haltelippe 11, welche an dem Ende des Dichtungsprofils 9 mit den Dichtungslippe 8a, 8b angeordnet ist und einen nicht bezifferten Flansch des Fensterrahmens 4 haltend umgreift, um das Dichtungsprofil 9 an dem Fensterrahmen 4 zu fixieren. Zudem weist das Dichtungsprofil 9 zwischen der Haltelippe 11 und der Dichtungslippe 8a eine Vertiefung in Form einer Nut auf, in welche ein Ende einer Innenverkleidung 12 haltend vorsteht.

In Figur 2 ist eine Schnittdarstellung durch ein Kraftfahrzeugfenster 1b mit einer Fensterführung 2b gemäß einer zweiten Ausführungsform gezeigt. Die mit der in Figur 1 gezeigten ersten Ausführungsform identischen Merkmale sind mit den gleichen Bezugszeichen versehen. Wie aus Figur 2 hervorgeht, unterscheidet sich die dort gezeigte Ausführungsform von der in Figur 1 gezeigten Ausführungsform dadurch, dass eine Fensterscheibe 3b vorgesehen ist, welche als Verbundsicherheitsglas ausgebildet ist und zwei über eine Zwischenschicht 13 miteinander verbundene Glasscheiben 14a, 14b umfasst. Das magnetisch wirksame Element 6 ist zwischen den Glasscheiben 14a, 14b der Fensterscheibe 3b angeordnet, so dass sich eine stufenlose Innenseite der Fensterscheibe 3b auch im Randbereich ergibt. Alternativ kann das magnetisch wirksame Element 6 auch wie in der Ausführungsform von Figur 1 an der Innenseite der Glasscheibe 14a angeordnet sein.

In einer nicht gezeigten Ausführungsform kann das magnetisch wirksame Element 6 beispielsweise auch als Elektromagnet ausgebildet sein, welcher über Stromleitungen zwischen den Glasscheiben 14a, 14b mit elektrischer Energie versorgt wird. Die Stromleitungen können sich dabei vorzugsweise in Längsrichtung des Dichtungsprofils 9 bis in den Türkasten erstrecken. Wird die Glasscheibe 3a, 3b zudem in dem gezeigten Bereich zumindest zwischen der Dichtungslippe 8a und dem Dichtungsvorsprung 10 getrübt, ist die Fensterführung 2a, 2b von außen nicht sichtbar und daher optisch ansprechend versteckt.

Bei beiden Ausführungsformen können mehrere magnetisch wirksame Elemente 6 in/an der Fensterscheibe 3a, 3b und/oder mehrere magnetisch wirksame Gegenelemente 7 an dem Fensterrahmen 4 vorgesehen sein, welche vorzugsweise in Längsrichtung des Fensterrahmens 4 voneinander beabstandet sind. Das magnetisch wirksame Element 6 und/oder das magnetisch wirksame Gegenelement 7 können aus einem magnetisierbaren Material, insbesondere aus beispielsweise ferromagnetischem Metall, als Permanentmagnet oder als Elektromagnet ausgebildet sein.

In einer weiteren nicht gezeigten Ausführungsform kann das mindestens eine magnetisch wirksame Element 6 über ein Halteelement an der Fensterscheibe 3a, 3b befestigt sein. Das Halteelement kann beispielsweise aus Kunststoff gebildet sein und/oder mit der Fensterscheibe 3a, 3b verklebt sein. Das Halteelement kann auch mit einem Vorsprung in den Spalt zwischen den zwei Glasscheiben 14a, 14b der Fensterscheibe 3b vorstehen und/oder einen Absatz bzw. eine Stufe in Richtung des magnetisch wirksamen Gegenelements 7 aufweisen, an/in welchem vorzugsweise das magnetisch wirksame Element 6 vorgesehen ist.

### Bezugszeichenliste:

- 1a, 1b: Kraftfahrzeugfenster
- 2a, 2b: Fensterführung
- 3a, 3b: Fensterscheibe
- 4: Fensterrahmen
- 5: Blende
- 6: Magnetisch wirksames Element
- 7: Magnetisch wirksames Gegenelement
- 8a, 8b: Dichtungslippen
- 9: Dichtungsprofil
- 10: Dichtungsvorsprung
- 11: Haltelippe
- 12: Innenverkleidung
- 13: Zwischenschicht
- 14a, 14b: Glasscheiben

## Patentansprüche

1. Fensterführung (2a; 2b) zur Führung einer versenkbaren Fensterscheibe (3a; 3b) eines Kraftfahrzeugs,
**gekennzeichnet durch** mindestens ein an der Fensterscheibe (3a; 3b) befestigbares magnetisch wirksames Element (6) und mindestens ein an einem Fensterrahmen (4), einer Seitenwand einer Fahrzeugkarosserie oder einer Fensterdichtung (9) befestigbares magnetisch wirksames Gegenelement (7).

2. Fensterführung (2a; 2b) nach Anspruch 1,
**dadurch gekennzeichnet,**
**dass** das magnetisch wirksame Element (6) und/oder das magnetisch wirksame Gegenelement (7) aus einem magnetisierbaren Material, insbesondere aus Metall, als Permanentmagnet oder als Elektromagnet ausgebildet ist.

3. Fensterführung (2a; 2b) nach Anspruch 1 oder 2;
**dadurch gekennzeichnet,**
**dass** das magnetisch wirksame Element (6) als Permanentmagnet oder Elektromagnet ausgebildet ist und das magnetisch wirksame Gegenelement (7) aus einem magnetisierbaren Material, insbesondere dem Metall des Fensterrahmens (4) bzw. der Seitenwand der Fahrzeugkarosserie, aus einem Permanentmagnet oder einem Elektromagnet gebildet ist.

4. Fensterführung (2a; 2b) nach Anspruch 1 oder 2
**dadurch gekennzeichnet,**
**dass** das magnetisch wirksame Element (6) aus einem magnetisierbaren Material, insbesondere Metall, als Permanentmagnet oder Elektromagnet ausgebildet ist, und das magnetisch wirksame Gegenelement (7) aus einem Permanentmagnet oder einem Elektromagnet gebildet ist.

5. Fensterführung (2a; 2b) nach einem der Ansprüche 1 bis 4,
**dadurch gekennzeichnet,**
**dass** das magnetisch wirksame Element (6) an einer Innenseite der Fensterscheibe (3a), in einer Aussparung in der Fensterscheibe oder zwischen zwei Scheiben (14a; 14b) einer als Verbundsicherheitsglas ausgebildeten Fensterscheibe (3b) angeordnet ist.

6. Fensterführung (2a; 2b) nach einem der Ansprüche 1 bis 5,
**dadurch gekennzeichnet,**
**dass** das magnetisch wirksame Gegenelement (7) in eine Fensterdichtung (9) eingebettet oder in einer Aussparung in einer Fensterdichtung (9) angeordnet ist, wobei die Fensterdichtung (9) insbesondere mehrere zur Anlage an der Fensterscheibe (3a; 3b) ausgebildete Dichtungslippen (8a; 8b) umfasst.

7. Fensterführung (2a; 2b) nach einem der Ansprüche 1 bis 6,
**gekennzeichnet durch** eine Fensterdichtung in Form eines Dichtungsprofils (9), insbesondere eines extrudierten Dichtungsprofils, in dessen Längsrichtung mehrere voneinander beabstandete magnetisch wirksame Gegenelemente (7) angeordnet sind.

8. Fensterführung (2a; 2b) nach Anspruch 7,
**dadurch gekennzeichnet,**
**dass** die magnetisch wirksamen Gegenelemente (7) in dem Dichtungsprofil (9) gleichmäßig oder ungleichmäßig verteilt angeordnet sind.

9. Kraftfahrzeugfenster (1a; 1b) umfassend einen Fensterrahmen (4) bzw. eine Seitenwand einer Fahrzeugkarosserie, eine in dem Fensterrahmen (4) bzw. an der Seitenwand versenkbar angeordnete Fensterscheibe (3a; 3b) sowie eine Fensterführung (2a; 2b) zur Führung der Fensterscheibe (3a; 3b) in dem Fensterrahmen (4) bzw. an der Seitenwand,
**dadurch gekennzeichnet,**
**dass** die Fensterführung (2a; 2b) nach einem der Ansprüche 1 bis 8 ausgebildet ist.

10. Kraftfahrzeugfenster (1a; 1b) nach Anspruch 9,
**dadurch gekennzeichnet,**
**dass** die Fensterscheibe (3a; 3b) bündig zu dem Fensterrahmen (4) bzw. der Seitenwand der Fahrzeugkarosserie oder zu einer an dem Fensterrahmen (4) bzw. der Seitenwand der Fahrzeugkarosserie befestigten Blende (5) angeordnet ist.

11. Kraftfahrzeugfenster (1a; b) nach Anspruch 9 oder 10,
**dadurch gekennzeichnet,**
**dass** die Fensterführung (2a; 2b) nahe der oberen Schließstellung der Fensterscheibe (3a; 3b) eine größere Anzahl an magnetisch wirksamen Gegenelementen (7) aufweist als nahe der unteren Öffnungsstellung der Fensterscheibe (3a; 3b).

12. Kraftfahrzeugfenster (1a; 1b) nach einem der Ansprüche 9 bis 11,
**gekennzeichnet durch** eine Steuereinrichtung zur Ansteuerung der magnetisch wirksamen Elemente (6) oder Gegenelemente (7) zur Bewegung der Fensterscheibe (3a; 3b) zwischen Schließ- und Öffnungsstellung und/oder zur Einstellung der magnetischen Haltekraft.

13. Kraftfahrzeugfenster (1a; 1b) nach einem der Ansprüche 9 bis 12,
**dadurch gekennzeichnet,**
**dass** die Fensterscheibe (3a; 3b) mehrere magnetisch wirksame Elemente (6) umfasst, insbesondere in Längsrichtung der Fensterführung (2a; 2b) voneinander beabstandet.

14. Fensterscheibe (3a; 3b) für ein Kraftfahrzeug, insbesondere für ein Kraftfahrzeugfenster (1a; 1b) nach einem der Ansprüche 9 bis 13, **gekennzeichnet durch** mindestens ein magnetisch wirksames Element (6), insbesondere mindestens einen Elektromagneten, welches in einem Randbereich angeordnet ist.
